# EUROPEAN PATENT APPLICATION

(11) **EP 4 600 564 A1**
(43) Date of publication of application: **13.08.2025**
(21) Application number: 24200678.1
(22) Date of filing: 17.09.2024
(51) Int. Cl.: F24F 1/0083, F24F 1/0358, F24F 13/22

(54) **DEHUMIDIFIER**

(30) Priority: 07.02.2024 KR 20240018766
(71) Applicant: LG Electronics Inc., Yeongdeungpo-gu Seoul 07336 (KR)
(72) Inventor: PARK, Janghee, 08592 Seoul (KR); JEONG, Yongki, 08592 Seoul (KR); KIM, Kyungrock, 08592 Seoul (KR); LEE, Jinwoo, 08592 Seoul (KR); PARK, Taeju, 08592 Seoul (KR)
(74) Representative: Vossius & Partner Patentanwälte Rechtsanwälte mbB

(57) **Abstract**

The present disclosure relates to a dehumidifier.

The dehumidifier according to embodiment of the present disclosure may include a main body equipped with a suction part and a fan; a dehumidification module including a dehumidification member which separates moisture from the air suctioned from the suction part by driving the fan; a vacuum pump configured to provide driving force to discharge moisture separated from the dehumidification module to the outside of the dehumidification module; a heat exchanger fluidly connected to the vacuum pump and configured to condense the separated moisture; and a drain tank configured to store water condensed in the heat exchanger, in which the dehumidification module and the heat exchanger may be disposed on an upper portion of the main body, the vacuum pump and the drain tank may be disposed at the lower portion of the main body, and the drain tank may be mounted to be withdrawable from a space corresponding to the lower side of the dehumidification module.

## Description

### BACKGROUND

The present disclosure relates to a dehumidifier.

A dehumidifier is a type of home appliance that lowers the humidity in a desired space by suctioning in air from a desired space, removing moisture contained in the air, and discharging the dehumidified air to a desired space.

A conventional dehumidifier removes moisture by suctioning air from a desired space and passing the air through a heat exchanger consisting of a condenser and an evaporator, thereby exchanging heat between the refrigerant flowing through the condenser and the evaporator and the air passing through them.

The evaporator absorbs heat from the surrounding air by evaporating the liquid refrigerant, and the condenser releases heat by condensing the gaseous refrigerant and transfers the heat to the surrounding air. In other words, the air passing through the heat exchanger exchanges heat with the refrigerant while passing through the evaporator, thereby lowering the humidity, and the air with the lowered humidity passes through the condenser, exchanges heat with the refrigerant, and the drying process proceeds.

The dried air passing through the heat exchanger is discharged to a desired space, thereby lowering the humidity in the air in the desired space.

According to this conventional dehumidifier, there was a problem that the temperature of the discharged air increased, causing discomfort to the user.

### SUMMARY

An object of the present disclosure is to provide a dehumidifier that may implement constant temperature dehumidification without increasing the temperature of an indoor space by selectively separating moisture in the air through a dehumidification module including a membrane without operating a refrigeration cycle.

An object of the present disclosure is to provide a dehumidifier that may shorten the dehumidification time because dehumidification may be accomplished by passing through a dehumidification module without requiring time for stabilization of the refrigeration cycle.

An object of the present disclosure is to provide a dehumidifier that may easily separate and condense moisture by generating a first suction flow of air to remove moisture and a second suction flow of air to perform heat exchange.

An object of the present disclosure is to provide a dehumidifier equipped with a two-way suction fan so that the first suction flow and the second suction flow may be suctioned into the dehumidifier in directions facing each other.

An object of the present disclosure is to provide a dehumidifier in which moisture separation performance may be improved by being configured so that the first direction of the suction flow of air to remove moisture and the second direction of flow of separated water vapor are perpendicular to each other.

An object of the present disclosure is to provide a dehumidifier that may move water vapor in the air passing through the dehumidification module to the inside of the membrane by generating a pressure difference between the inside and outside of the membrane using a vacuum pump.

An object of the present disclosure is to provide a dehumidifier that facilitates the removal of condensed moisture by allowing water vapor separated from a dehumidification module to flow into a heat exchanger via a vacuum pump and exchange heat with indoor air in the heat exchanger.

An object of the present disclosure is to provide a dehumidifier in which the first part where the fan that generates air flow is disposed is disposed in the upper space of the dehumidifier, so that air may be easily suctioned into the indoor space.

An object of the present disclosure is to provide a dehumidifier in which a dehumidification module that separates moisture from the air is disposed in the first part, and the separated water vapor falls in the direction of gravity, making it easy to collect water vapor and forming a compact piping connected to a vacuum pump.

An object of the present disclosure is to provide a dehumidifier in which the main flow of indoor air requiring dehumidification and the sub-flow for the heat exchanger may easily occur in two directions using one fan by placing the heat exchanger in the first part.

An object of the present disclosure is to provide a dehumidifier that may facilitate the generation of a main flow in which a relatively large amount of suction is performed and a sub-flow in which a small amount of suction is performed and may prevent pressure loss by dividing the first part through a partition wall and disposing a dehumidification module and a heat exchanger in the divided area.

An object of the present disclosure is to provide a dehumidifier that may easily suction the separated water vapor into the vacuum pump by the gravitational effect by disposing a vacuum pump for suctioning water vapor separated from a dehumidification module in the second part and forming the second part as the lower space of the dehumidifier.

An object of the present disclosure is to provide a dehumidifier that quickly transfers high-temperature water vapor passing through the vacuum pump to the heat exchanger, is easy to block noise generated by the vacuum pump and is also effective for maintenance accessibility by disposing the vacuum pump in the second part below the heat exchanger.

An object of the present disclosure is to provide a dehumidifier that facilitates the flow of condensed water in the direction of gravity by disposing a drain tank for storing water condensed in a heat exchanger in the second part.

An object of the present disclosure is to provide a dehumidifier in which the upper space of the dehumidifier may be efficiently utilized and the user's accessibility to the water supply tank is improved by disposing the water supply tank that supplies water to the dehumidification module in the second part.

An object of the present disclosure is to provide a dehumidifier from which the drain tank and a water supply tank may be easily separated.

An object of the present disclosure is to provide a dehumidifier that may suppress water splashing when condensate is collected in the drain tank.

An object of the present disclosure is to provide a dehumidifier that may more precisely measure the water level of condensate stored in the drain tank.

An object of the present disclosure is to provide a dehumidifier that may inform the remaining operation time of the dehumidifier based on the water level in the drain tank.

A dehumidifier according to an embodiment of the present disclosure may include a main body including a suction part and a fan; and a dehumidification module including a dehumidification member which separates moisture from the air suctioned from the suction part by driving the fan.

The dehumidifier may further include a vacuum pump configured to provide driving force to discharge moisture separated from the dehumidification module to an outside of the dehumidification module.

The dehumidifier may further include a heat exchanger fluidly connected to the vacuum pump and configured to condense the separated moisture.

The dehumidifier may further include a drain tank configured to store water condensed in the heat exchanger.

The dehumidification module and the heat exchanger may be disposed on an upper portion of the main body.

The vacuum pump and the drain tank may be disposed at a lower portion of the main body.

The drain tank may be mounted to be withdrawable from a space corresponding to the lower side of the dehumidification module.

The dehumidifier may further include a base forming a bottom surface of the main body; and a first partition wall configured to divide the dehumidification module, the heat exchanger, the vacuum pump, and the drain tank in a vertical direction.

A rail extending in the direction in which the drain tank may be mounted is formed on an upper surface of the base.

A rail groove inserted into the rail may be formed on a lower surface of the drain tank.

The cross-sectional area of the rail groove gradually may decrease from the inlet side where the rail is inserted to the opposite side thereof.

On a lower side of the first partition wall, a display may be provided to provide information about the drain tank.

A guide rib may be formed in the drain tank, extending upward along an edge of the upper surface to shield a display.

The dehumidifier may further include a space provided on an upper surface of the first partition wall and in which the dehumidification module is installed, and a second partition wall configured to separate the space where the fan and the heat exchanger are installed.

The dehumidifier may further include a third partition wall provided on a lower surface of the first partition wall and configured to separate the installation space of the drain tank and the installation space of the vacuum pump.

A sensor that detects a magnet provided in the drain tank may be installed on the third partition wall.

The dehumidifier may further include a water supply tank configured to supply water to the dehumidification module.

The water supply tank may be mounted to be withdrawable from a space corresponding to the lower side of the dehumidification module.

The dehumidifier may further include a fourth partition wall provided on a lower surface of the first partition wall and configured to divide the drain tank and the water supply tank.

The dehumidifier may further include a mounting guide provided on an upper surface of the base and configured to guide the mounting of the drain tank and the water supply tank.

The mounting guide may include a first mounting guide extending upward from one edge of the base and configured to be in contact with one side of the drain tank.

The mounting guide may include a second mounting guide extending upward from the other edge of the base and configured to be in contact with one side of the water supply tank.

The dehumidifier may further include a water supply connection pipe connected to the water supply tank and extending through the first partition wall to supply water from the water supply tank to the dehumidification module.

The dehumidifier may further include a water pump installed in the water supply connection pipe.

A tank duct forming a water flow path that supplies water to the water pump may be provided inside the water supply tank.

The dehumidifier may further include a condensate pipe extending to guide water condensed in the heat exchanger to the drain tank.

The third partition wall may include a second through-hole through which the condensate pipe passes.

A first guide may be formed on the third partition wall to guide the water flowing through the condensate pipe to flow into the drain tank.

The first guide may protrude from the third partition wall toward the space where the drain tank is located.

The first guide may extend to surround at least a portion of the circumference of the second through-hole.

The drain tank may include a tank main body configured to store water; and a tank cover detachably coupled to an upper surface of the tank main body.

The tank cover may be provided with a second guide which is disposed below the first guide and configured to guide water flowing into the tank main body.

The second guide may form a water flow path in the vertical direction and may be coupled to penetrate the tank cover.

The second guide may include an inlet part formed at the upper end and in which water flows; a discharge part formed at the lower end and from which water is discharged; and a guide surface configured to connect the inlet part and the discharge part and extending roundly in a direction approaching the third partition wall.

The dehumidifier may further include a water level sensor configured to detect the water level in the drain tank; and a control part configured to calculate and display the remaining operation time of the dehumidifier based on the water level detected by the water level sensor.

### BRIEF DESCRIPTION OF THE DRAWINGS

FIG. 1 is a perspective view illustrating the outer appearance of a dehumidifier according to an embodiment of the present disclosure.
FIG. 2 is a rear perspective view illustrating the configuration of a dehumidifier according to an embodiment of the present disclosure.
FIG. 3 is a front perspective view illustrating the configuration of a dehumidifier according to an embodiment of the present disclosure.
FIG. 4 is a left side perspective view illustrating the configuration of a dehumidifier according to an embodiment of the present disclosure.
FIG. 5 is a right side perspective view illustrating the configuration of a dehumidifier according to an embodiment of the present disclosure.
FIG. 6 is an exploded perspective view illustrating a dehumidifier according to an embodiment of the present disclosure.
FIG. 7 is a cross-sectional view taken along line 7-7 in FIG. 1.
FIG. 8 is a perspective view illustrating the configuration of the second part of the dehumidifier according to an embodiment of the present disclosure.
FIG. 9 is a plan view illustrating the configuration of the second part of the dehumidifier according to an embodiment of the present disclosure.
FIG. 10 is a view illustrating the portion where the drain tank and the water supply tank are installed among the second part of the dehumidifier according to an embodiment of the present disclosure.
FIG. 11 is a view illustrating a state where a condensate pipe extends from a heat exchanger according to an embodiment of the present disclosure.
FIG. 12 is a view illustrating the configuration of a first partition wall and a third partition wall according to an embodiment of the present disclosure.
FIG. 13 is a view illustrating a state where the drain tank is separated from the second part of the dehumidifier according to an embodiment of the present disclosure.
FIG. 14 is a front perspective view illustrating the configuration of a drain tank according to an embodiment of the present disclosure.
FIG. 15 is a rear perspective view illustrating the configuration of a drain tank according to an embodiment of the present disclosure.
FIG. 16 is a view illustrating the cover of a drain tank according to an embodiment of the present disclosure.
FIG. 17 is a view illustrating the configuration of a water supply tank according to an embodiment of the present disclosure.
FIG. 18 is a view illustrating a tank duct of a water supply tank according to an embodiment of the present disclosure.
FIG. 19 is a cross-sectional view taken along line 19-19 of FIG. 8.
FIG. 20 is a view illustrating a state where the first suction flow and the second suction flow are suctioned and a discharge flow is generated in the dehumidifier according to an embodiment of the present disclosure.
FIG. 21 is a view illustrating a state where fluid is supplied from a water supply tank to a dehumidification module in a dehumidifier according to an embodiment of the present disclosure.
FIG. 22 is a flowchart illustrating a method for controlling a dehumidifier according to an embodiment of the present disclosure.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the disclosure may be practiced. These embodiments are described in sufficient detail to enable those skilled in the art to practice the disclosure, and it is understood that other embodiments may be utilized and that logical structural, mechanical, electrical, and chemical changes may be made without departing from the scope of the disclosure. To avoid detail not necessary to enable those skilled in the art to practice the disclosure, the description may omit certain information known to those skilled in the art. The following detailed description is, therefore, not to be taken in a limiting sense.

Also, in the description of embodiments, terms such as first, second, A, B, (a), (b) or the like may be used herein when describing components of the present disclosure. Each of these terminologies is not used to define an essence, order or sequence of a corresponding component but used merely to distinguish the corresponding component from other component(s). It should be noted that if it is described in the specification that one component is "connected," "coupled" or "joined" to another component, the former may be directly "connected," "coupled," and "joined" to the latter or "connected", "coupled", and "joined" to the latter via another component.

In the specification or claims, the expression of "an element A includes or comprises at least one of a, b, and/or c" may mean (1) the element A includes or comprises "a", (2) the element A includes or comprises "b", (3) the element A includes or comprises "c", (4) the element A includes or comprises "a and b", (5) the element A includes or comprises "b and c", (6) the element A includes or comprises "a and c", and (7) the element A includes or comprises "a, b and c".

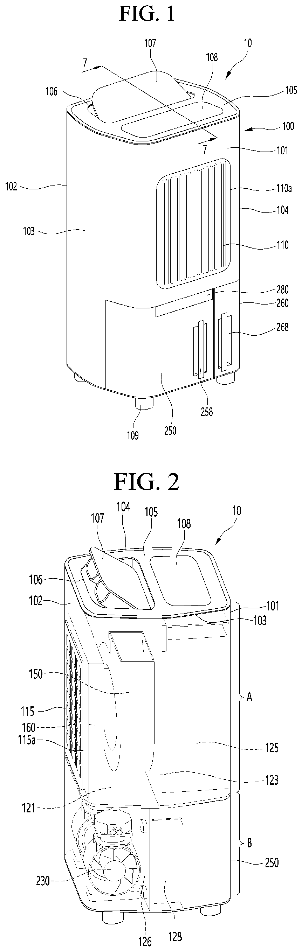

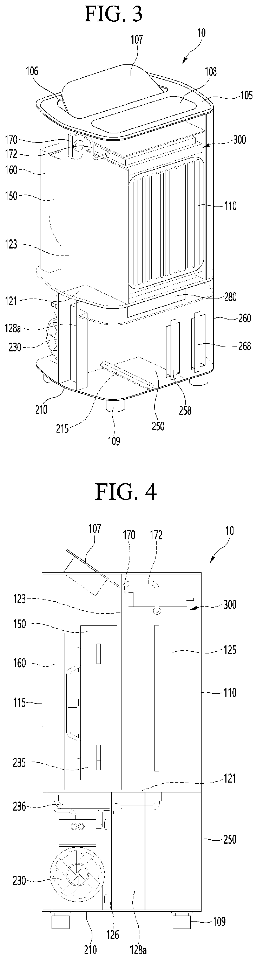

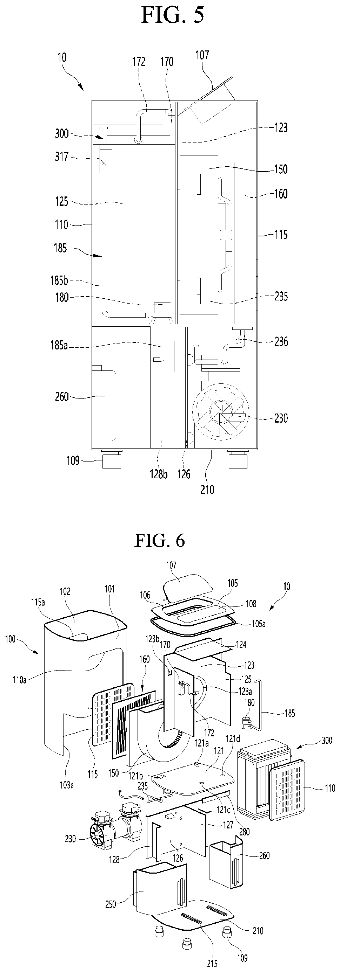

FIG. 1 is a perspective view illustrating the outer appearance of a dehumidifier according to an embodiment of the present disclosure, FIG. 2 is a rear perspective view illustrating the configuration of a dehumidifier according to an embodiment of the present disclosure, FIG. 3 is a front perspective view illustrating the configuration of a dehumidifier according to an embodiment of the present disclosure, FIG. 4 is a left side perspective view illustrating the configuration of a dehumidifier according to an embodiment of the present disclosure, and FIG. 5 is a right side perspective view illustrating the configuration of a dehumidifier according to an embodiment of the present disclosure.

Referring to FIGS. 1 to 5, the dehumidifier 10 according to an embodiment of the present disclosure may have a three-dimensional shape in which the height in the vertical direction is greater than the width in the front and rear direction.

Directions are defined. In FIG. 1, the surface on which the first suction part 110 is formed is defined as the front surface, the surface on which the second suction part 115 is formed in FIG. 2 is defined as the rear surface, and the surface on which the discharge part 106 is formed is defined as the upper surface.

The dehumidifier 10 may include a main body 100 that forms an outer appearance. The main body 100 may accommodate a number of components for suctioning air, removing moisture from the suctioned air, and discharging dehumidified air.

The main body 100 may include a front portion 101, a rear portion 102, a first side portion 103, a second side portion 104, an upper portion 105, and a lower portion. The lower portion may be defined by the base 210.

The front portion 101 may include a first suction part 110a that suctions air. A first suction grill 110 may be provided in the first suction part 1 10a. Air from an indoor space subject to dehumidification may be suctioned in through the first suction part 1 10a. The air flow suctioned from the first suction part 110a may be referred to as "first suction flow (first flow)" or "main flow."

The rear portion 102 may be disposed to face the front portion 101.

The rear portion 102 may include a second suction part 115a that suctions air. A second suction grill 115 may be provided in the second suction part 115a. Air from the indoor space to flow into the heat exchanger 160 may be suctioned in through the second suction part 115a. The air flow suctioned from the second suction part 115a may be referred to as "second suction flow (second flow)" or "sub flow."

The first side portion 103 connects one side of the front portion 101 and the rear portion 102 and may form one side of the dehumidifier.

The second side portion 104 connects the other side of the rear portion 102 of the front portion 101 and may form the other side of the dehumidifier. The second side portion 104 may be disposed to face the first side portion 103.

The upper portion 105 may form a discharge part 106 that discharges air from the dehumidifier 10. The discharge part 106 may be provided with a discharge vane 107 that controls opening or closing of the discharge part 106.

The upper portion 105 may include a display 108 that outputs operation information of the dehumidifier 10. The display 108 may be provided with an input part for inputting operation commands.

The display 108 is disposed at a location adjacent to the front portion 101 of the upper surface portion 105, and the discharge part 106 may be formed at a location adjacent to the rear portion 102 of the upper portion 105.

When a user approaches the dehumidifier 10, the user may easily operate the display 108 by approaching the front portion 101 in a direction closer to the front portion 101. In addition, since the tanks 250 and 260 provided in the dehumidifier 10 are detachably provided on the front portion 101, user accessibility and convenience of operation may be improved.

Tanks 250 and 260 for storing water may be provided at the lower portion of the dehumidifier 10 so that they may be mounted or detached.

The tanks 250 and 260 may include a drain tank 250 in which condensed water is stored after water vapor separated from the dehumidification module 300 is condensed in the heat exchanger 160. The drain tank 250 may include a first handle 25 8 that the user may hold.

The tanks 250 and 260 may include a water supply tank 260 that stores water to be supplied to the dehumidification module 300 in order to improve the moisture separation characteristics of the dehumidification module 300. The water supply tank 260 may include a second handle 268 that the user may hold.

The dehumidifier 10 may further include an auxiliary display 280 that provides information regarding whether the tanks 250 and 260 are mounted. The auxiliary display 280 may be provided in the front portion of the first partition wall 121. The auxiliary display 280 may provide a notification regarding emptying or supplying water to the tanks 250 and 260, based on the water levels of the tanks 250 and 260.

When the tanks 250 and 260 are mounted, the auxiliary display 280 may be provided at a location shielded by the tanks 250 and 260. For example, the tanks 250 and 260 are made of a transparent material, so even if the tanks 250 and 260 are mounted, the information output from the auxiliary display 280 can be visible from the outside.

A base 210 is provided on the lower portion the dehumidifier 10, and the base 210 may function as a support plate that forms the machine room of the dehumidifier 10. A plurality of legs 109 placed on the ground may be provided on the lower side of the base 210.

The dehumidifier 10 may include a first part A forming an upper portion and a second part B forming a lower portion. The first part A may be referred to as an "upper portion" and the second part B may be referred to as a "lower portion."

Inside the main body 100, a first partition wall 121 that divides a first space (upper space) where the components constituting the first part A are installed and a second space (lower space) where the components constituting the second part B are installed may be provided.

Components constituting the first part A may include a dehumidification module 300, a fan 150, and a heat exchanger 160.

The components constituting the first part A may further include a valve device 170 and a supply pipe 172 that supply at least some of the air discharged from the fan 150 to the dehumidification module 300.

Components constituting the second part B may include a vacuum pump 230 and tanks 250 and 260. The tanks 250 and 260 may include a drain tank 250 and a water supply tank 260.

The vacuum pump 230 may be aligned below the fan 150 and the heat exchanger 160, and the tanks 250 and 260 may be aligned below the dehumidification module 300.

The components constituting the first part A or the second part B may be connected to the water supply tank 260 and include a water pump 180 and a water supply connection pipe 185.

The dehumidification module 300 may be installed on the upper surface of the first partition wall 121.

The dehumidification module 300 may be disposed inside the first suction part 11 0a. Accordingly, the dehumidification module 300 may be disposed so that air flowing into the first part A through the first suction part 110a passes.

The first part A may further include a second partition wall 123 that divides the installation space of the dehumidification module 300 and the installation space of the fan 150. The second partition wall 123 allows the first suction flow to pass through the dehumidification module 300 in the first suction part 110a and the second suction flow to pass through the heat exchanger 160 in the second suction part 115a to be separated from each other.

The flow rate of the first suction flow and the flow rate of the second suction flow may be formed differently. Since the first suction flow and the second suction flow are separated by the second partition wall 123, it is possible to prevent flow loss from occurring due to a pressure difference between the mutual flows.

The flow rate of the first suction flow may be greater than the second suction flow rate. For example, the flow rate of the second suction flow may be formed at a level of 60% of the flow rate of the first suction flow rate. For example, the first suction flow rate may be generated by about 170 CMH and the second suction flow rate may be generated by about 100 CMH.

The first suction flow is a flow of air to be dehumidified and requires a large amount, but the second suction flow may require a relatively small amount to condense moisture in the heat exchanger 160.

The fan 150 may be controlled so that the suction flow rate of the first suction side where the first suction flow is suctioned is greater than the second suction side where the second suction flow is suctioned.

The dehumidification module 300 may be disposed in the space between the second partition wall 123 and the first suction part 110a. The space between the second partition wall 123 and the first suction part 110a may be referred to as a "dehumidification module space part."

The fan 150 and the heat exchanger 160 may be disposed in the space between the second partition wall 123 and the second suction part 115a. The space between the second partition wall 123 and the second suction part 115a may be referred to as a "fan space part" or "heat exchanger space part."

The air suctioned through the first suction part 110a may be separated from moisture after passing through the dehumidification module 300. The moisture-separated air may be suctioned into the suction side of the fan 150 after passing through the second partition wall 123.

The fan 150 may include a bidirectional suction fan that suctions and discharges air from both directions. For example, the fan 150 may include a two-way centrifugal fan that suctions air in axial directions on both sides and discharges the air in radial directions.

The suction side of the fan 150, where the air passing through the dehumidification module 300 is suctioned, may be referred to as the "first suction side." In other words, the first suction flow may be understood as an air flow flowing from the first suction part 110a to the first suction side of the fan 150.

The dehumidification module 300 may be detachably mounted inside the main body 100.

The dehumidifier 10 may further include a module mounting guide 125 that guides the mounting of the dehumidification module 300. The module mounting guide 125 may form a portion of the first part A.

The module mounting guide 125 is provided inside the main body 100 and may be connected to the second partition wall 123. The module mounting guide 125 may extend from the second partition wall 123 toward the first suction part 110a.

A plurality of module mounting guides 125 are provided, and the plurality of module mounting guides 125 may be spaced apart from each other. The dehumidification module 300 may be mounted in the space between the plurality of module mounting guides 125.

The plurality of module mounting guides 125 may be disposed adjacent to or in contact with both sides of the dehumidification module 300.

The heat exchanger 160 may be disposed inside the second suction part 115a. Accordingly, the heat exchanger 160 may be disposed so that air flowing into the first part A through the second suction part 115a passes.

The heat exchanger 160 may be disposed between the second suction part 115a and the fan 150. Accordingly, the air suctioned through the second suction part 115a may pass through the heat exchanger 160 and then be suctioned into the suction side of the fan 150. At this time, the air may condense the water vapor while exchanging heat with the water vapor separated from the dehumidification module 300.

The suction side of the fan 150, where the air passing through the heat exchanger 160 is suctioned, may be referred to as the "second suction side." In other words, the second suction flow may be understood as an air flow flowing from the second suction part 115a to the second suction side of the fan 150.

The first suction flow and the second suction flow are suctioned in the axial direction of the fan 150 and discharged in the radial direction, and then may be discharged through the discharge part 106 provided on the upper portion 105 of the dehumidifier 10.

The second part B may be provided on the lower side of the first partition wall 121.

The second part B may further include a third partition wall 126 that divides the installation space of the vacuum pump 230 and the installation space of the tanks 250 and 260. The third partition wall 126 may divide the installation space of the vacuum pump 230 and the installation space of the tanks 250 and 260 in the front and rear direction.

By the third partition wall 126, the noise generated by the vacuum pump 230 may be prevented from being transmitted to the front side of the dehumidifier 10, that is, to the installation space of the tanks 250 and 260 that users often access.

The third partition wall 126 can easily provide an installation area for sensors 256 and 266 for detecting mounting of the tanks 250 and 260 and a delivery path for condensate to be delivered to the drain tank 250.

The third partition wall 126 is connected to the base 210 forming the lower portion of the dehumidifier 10 and may be configured to protrude upward from the base 210.

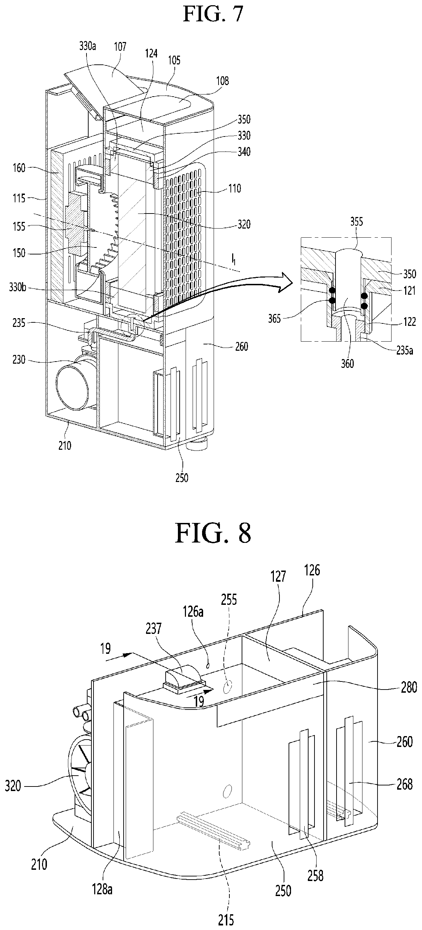

The second part B may further include a fourth partition wall 127 (see FIG. 8) that divides the installation space of the tanks 250, 260 into the installation space of the drain tank 250 and the installation space of the water supply tank 260. The fourth partition wall 127 may divide the installation space of the drain tank 250 and the installation space of the water supply tank 260 in the left and right direction.

The tanks 250 and 260 may be detachably mounted on the dehumidifier 10.

The second part B may include a tank mounting guide 128 provided on both left and right sides of the base 210 to guide the mounting of the tanks 250 and 260.

The tank mounting guide 128 may include a first mounting guide 128a that guides the mounting of the drain tank 250. The first mounting guide 128a is connected to the base 210 and may be configured to protrude upward from the base 210.

The drain tank 250 may be detachably mounted in the space between the fourth partition wall 127 and the first mounting guide 128a. The first mounting guide 128a may be disposed adjacent to or in contact with one side of the drain tank 250.

The tank mounting guide 128 may include a second mounting guide 128b that guides the mounting of the water supply tank 260. The second mounting guide 128b is connected to the base 210 and may be configured to protrude upward from the base 210.

The water supply tank 260 may be detachably mounted in the space between the fourth partition wall 127 and the second mounting guide 128b. The second mounting guide 128b may be disposed adjacent to or in contact with one side of the water supply tank 260.

The base 210 may include a rail 215 that guides the mounting of the tanks 250 and 260. The rail 215 protrudes from the base 210 and may be configured to extend in the direction in which the tanks 250 and 260 are mounted, that is, in the front and rear direction. The rail 215 may be provided on the lower side of the drain tank 250 and the lower side of the water supply tank 260, respectively.

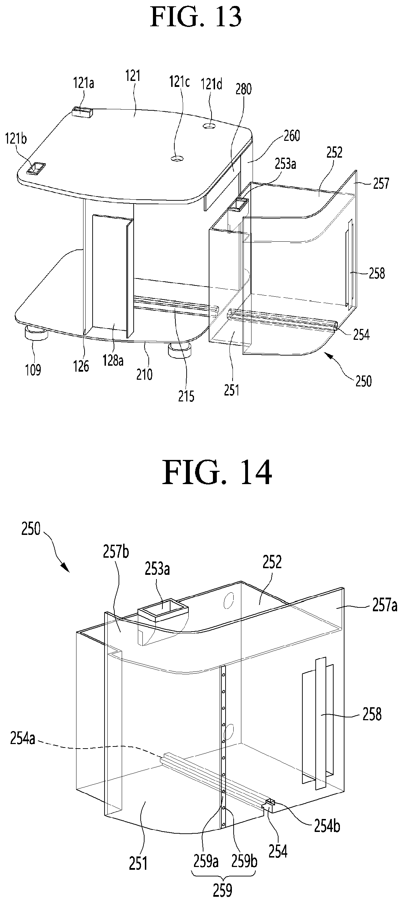

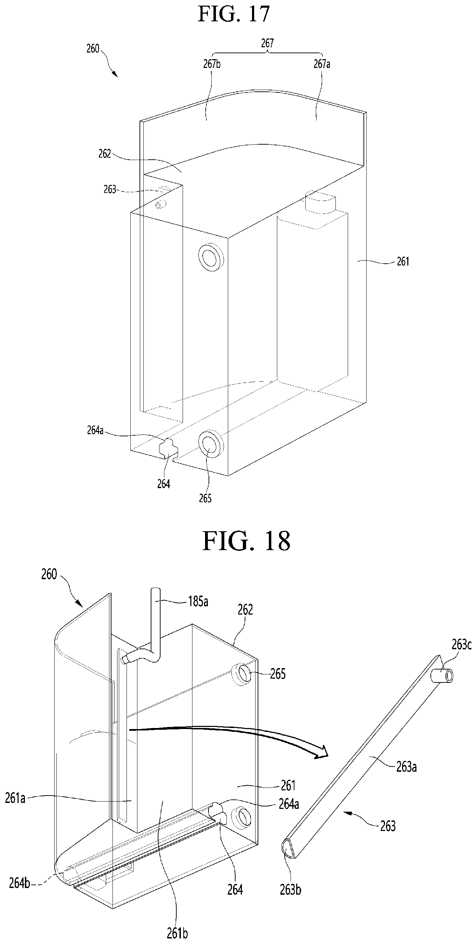

The plurality of rails 215 may be inserted into the rail groove 254 (see FIG. 13) formed on the lower surface of the drain tank 250 and the rail groove 264 (see FIG. 17) formed on the lower surface of the water supply tank 260.

The dehumidifier 10 may include air supply devices 170 and 172 that supply air to the dehumidification module 300 in order to improve the dehumidification performance of the dehumidification module 300. The air supply devices 170 and 172 may be configured to supply at least some of the air discharged from the fan 150 to the dehumidification module 300.

The air supply devices 170 and 172 may include a valve device 170 disposed on the discharge side of the fan 150. For example, the valve device 170 may be disposed on the second partition wall 123. In particular, the valve device 170 may be disposed at a position adjacent to the upper end of the second partition wall 123 adjacent to the discharge side of the fan 150.

At least some of the air discharged from the fan 150 may flow into the second valve device 170 through the guide hole. The guide hole may be formed in the second partition wall 123.

The second valve device may be installed in the guide hole.

The air supply devices 170 and 172 are connected to the valve device 170 and may further include a supply pipe 172 that supplies air that has passed through the valve device 170 to the dehumidification module 300. The supply pipe 172 may be connected to the connection port of the dehumidification module 300.

The dehumidifier 10 may include a connection pipe 235 through which water vapor separated from the dehumidification module 300 flows and a vacuum pump 230 connected to the connection pipe 235. The connection pipe 235 may be referred to as a "water vapor connection pipe."

The connection pipe 235 includes a first connection pipe which is connected to the dehumidification module 300 and connected to the suction side of the vacuum pump 230, and the separated water vapor from the dehumidification module 300 may be suctioned into the vacuum pump 230 through the first connection pipe.

The first connection pipe extends from the lower surface of the first partition wall 121, and the first partition wall 121 may have a port communication hole 121c (see FIG. 6) connected to the dehumidification module 300.

The connection pipe 235 is connected to the discharge side of the vacuum pump 230 and includes a second connection pipe connected to the heat exchanger 160, and high-temperature water vapor discharged from the vacuum pump 230 may flow into the heat exchanger 160 through the second connection pipe.

The water vapor passing through the vacuum pump 230 may be compressed by the vacuum pump 230 and have a high temperature state, for example, temperature of about 45 to 50°C.

The water vapor passing through the vacuum pump 230 may form a flow rate of less than about 5% of the total suction flow rate of the system, that is, the flow rate suctioned through the first suction part 110a. Therefore, the water vapor may be sufficiently converted into condensate by exchanging heat with the air suctioned through the second suction part 115a.

The second connection pipe may be connected to the inlet port 121a (see FIG. 6) of the first partition wall 121. The inlet port 121a may be coupled to the inlet part of the heat exchanger 160.

The heat exchanger 160 may be configured to exchange heat between the air suctioned in from the second suction part 115a and the water vapor flowing through the second connection pipe. For example, the second connection pipe may be connected to the lower end portion of the heat exchanger 160.

The dehumidifier 10 further includes a condensate pipe 236 through which water condensed in the heat exchanger 160 flows, and the condensate pipe 236 may be connected to the discharge side of the heat exchanger 160. For example, the condensate pipe 236 may be connected to the lower end portion of the heat exchanger 160.

The condensate pipe 236 is connected to the discharge port 121b (see FIG. 6) of the first partition wall 121 and may extend from the lower surface of the first partition wall 121.

The condensate pipe 236 is provided in the second part B and may be disposed to communicate with a space where the drain tank 250 is mounted.

The dehumidifier 10 is fluidly connected to the water tank 260 and may further include a water pump 180 that provides driving force to supply water from the water supply tank 260 to the dehumidification module 300.

For example, the water pump 180 is disposed in the first part A and may be seated on the upper side of the first partition wall 121. However, it is not limited to this, and the water pump 180 may be placed in the second part B.

The dehumidifier 10 is connected to the water pump 180 and may further include a water supply connection pipe 185 that delivers water from the water supply tank 260 to the dehumidification module 300.

The water supply connection pipe 185 is connected to the tank duct 263 of the water supply tank 260 and may include a first connection pipe 185a (see FIG. 18) that delivers water from the water supply tank 260 to the water pump 180. The first connection pipe 185a may pass through the first partition wall 121 and be connected to the water pump 180.

The first partition wall 121 may include a water supply through-hole 121d (see FIG. 6) through which the first connection pipe 185a passes.

The water supply connection pipe 185 is connected to the water supply pump 180 and may include a second connection pipe 185b extending to the dehumidification module 300. The second connection pipe 185b may be connected to the water supply port of the dehumidification module 300.

FIG. 6 is an exploded perspective view illustrating a dehumidifier according to an embodiment of the present disclosure, and FIG. 7 is a cross-sectional view taken along line 7-7 in FIG. 1.

Referring to FIG. 6, the dehumidifier 10 according to an embodiment of the present disclosure may include a main body 100 that accommodates a plurality of components for dehumidifying air.

The main body 100 may include a front portion 101, a rear portion 102, two side portions 103 and 104, and an upper portion 105.

The upper portion 105 may consist of a detachable plate. The upper portion 105 may be coupled to the open upper end portion of the main body 100.

The upper portion 105 may include a discharge part 106 that discharges air, a discharge vane 107 that opens and closes the discharge part 106, and a display 108.

A sealing member 105a may be provided between the open upper end portion of the main body 100 and the upper portion 105 to prevent air leakage.

The main body 100 may include a first suction part 110a through which the first suction flow is suctioned. The first suction part 110a is formed by penetrating at least a portion of the front portion 101, and a first suction grill 110 may be mounted on the first suction part 110a.

The main body 100 may include a second suction part 115a through which the second suction flow is suctioned. The second suction part 115a is formed by penetrating at least a portion of the rear portion 102, and a second suction grill 115 may be mounted on the second suction part 115a.

Between the first suction part 110a and the second suction part 115a, a dehumidification module 300, a fan 150, and heat exchanger 160 may be disposed in sequence in the direction from the first suction part 110a toward the second suction part 115a.

The first partition wall 121 that divides the dehumidifier 10 into the first part A and the second part B may be formed with communication parts 121a, 121b, and 121c through which water vapor or condensate passes. The communication parts 121a, 121b, and 121c may include a port communication hole 121c that guides the water vapor separated from the dehumidification module 300 to flow to the vacuum pump 230.

The communication parts 121a, 121b, and 121c may include an inlet port 121a that guides high-temperature water vapor passing through the vacuum pump 230 to flow into the heat exchanger 160.

The communication parts 121a, 121b, and 121c may include a discharge port 121b that guides the condensed water condensed in the heat exchanger 160 to flow into the drain tank 250.

The dehumidifier 10 may include a second partition wall 123 which extends upward from the first partition wall 121 and divides the internal space of the first part A into a space where the dehumidification module 300 is located and a space where the fan 150, and a heat exchanger are located.

The second partition wall 123 may have a fan suction part 123a which is formed on the outlet side of the dehumidification module 300 based on the first suction flow and guides the air passing through the dehumidification module 300 to the suction side of the fan 150.

The fan suction part 123a may include a round suction guide (bell mouth) so that air may be smoothly suctioned in the axial direction of the fan 150.

The dehumidifier 10 may include two module mounting guides 125 that protrude from the second partition wall 123 and guide the mounting of the dehumidification module 300. The module mounting guide 125 may protrude from the second partition wall 123 in a direction toward the first suction part 110a.

The two module mounting guides 125 may be disposed on both sides of the fan suction part 123a. The front and rear width of the dehumidification module 300 supported by the two module mounting guides 125 may be larger than the diameter of the fan suction part 123a. Accordingly, the dehumidification module 300 may cover the fan suction part 123a.

The first suction flow passes through the second partition wall 123 through the fan suction part 123a and may be suctioned into the first suction side of the fan 150.

The second suction flow suctioned through the second suction part 115a may pass through the heat exchanger 160 and then be suctioned into the second suction side of the fan 150.

The dehumidifier 10 may further include a plate 124 coupled to the second partition wall 123. For example, the plate 124 is coupled to the upper end portion of the second partition wall 123 and may protrude in a direction toward the front portion 101.

The plate 124 may be disposed to divide the space between the upper portion 105 and the upper end of the dehumidification module 300. By driving the vacuum pump 230, vacuum pressure is applied to the dehumidification module 300, and the plate 124 may block the vacuum pressure from acting on the upper portion 105.

The main body 100 may include an opening to form an inlet space in which the tanks 250 and 260 are mounted. The opening is formed from the front portion 101 to both side portions 103 and 104 and may be configured to be open in the direction in which the tanks 250 and 260 are pulled in or out.

Referring to FIG. 7, the first part A may include a fan motor 155 for driving the fan 150. The fan motor 155 may be coupled to the central hub of the fan 150. The shaft of the fan motor 155 may be coupled to the hub 151 in the axial direction (front and rear direction).

The center line ℓ1 passing through the center of the fan motor 155 in the front and rear direction may pass through the dehumidification module 300, the fan suction part 123a, and the heat exchanger 160. For example, the center line ℓ1 may pass through the center of the dehumidification module 300, the center of the fan suction part 123a, and the center of the heat exchanger 160.

The dehumidification module 300 may be seated on the first partition wall 121.

The dehumidification module 300 may include a dehumidification member 320 that selectively separates moisture.

The dehumidification module 300 may further include a fixing part 330 supporting an end portion of the dehumidification member 320 and a first cap 340 in which the fixing part 330 is filled.

The dehumidification module 300 may further include a second cap 350 that covers the first cap 340.

The fixing part 330, the first cap 340, and the second cap 350 may be provided on both sides of the dehumidification member 320, respectively. In other words, the fixing part 330, the first cap 340, and the second cap 350 may be provided on the upper and lower sides of the dehumidification member 320, respectively.

The lower surface of the dehumidification module 300 may be coupled to the first partition wall 121.

The dehumidification module 300 may include a connection port 360 protruding from the second cap 350 in a direction toward the first partition wall 121. The connection port 360 may be coupled to the protrusion 122 of the first partition wall 121. The protrusion 122 may protrude downward from the lower surface of the first partition wall 121.

For example, the connection port 360 may be inserted into the protrusion 122.

A sealing member 365 may be provided on the outer peripheral surface of the connection port 360 to seal the space between the protrusion 122 and the connection port 360. By the sealing member 365, the connection port 360 and the protrusion 122 may be firmly coupled.

A plurality of sealing members 365 may be provided.

A cap hole 355 is formed in the second cap 350, and the cap hole 355 may extend to the connection port 360. Moisture (water vapor) separated from the dehumidification module 300 may be discharged to the outside of the dehumidification module 300 through the cap hole 355.

A connection pipe 235 that guides the flow of water vapor, that is, a first connection pipe, may be coupled to the protrusion 122. The first connection pipe may extend from the protrusion 122 to the vacuum pump 230 and be connected to the vacuum pump 230.

The first connection pipe may communicate with the connection port 360 inside the protrusion 122.

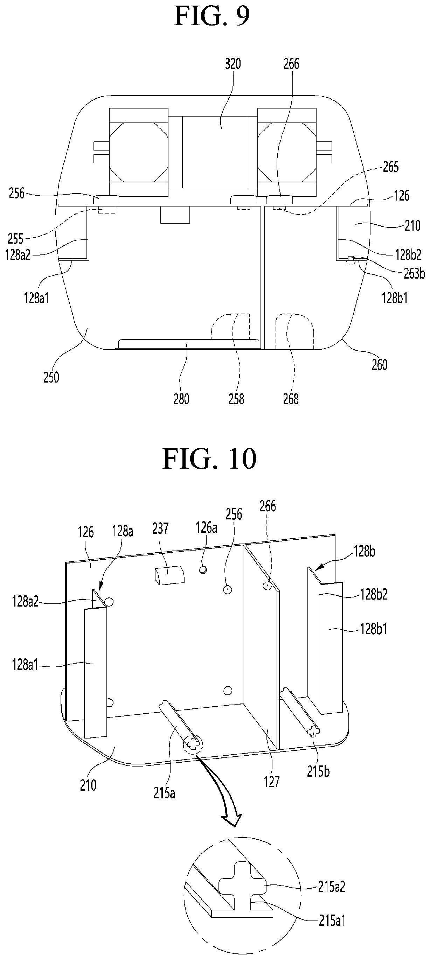

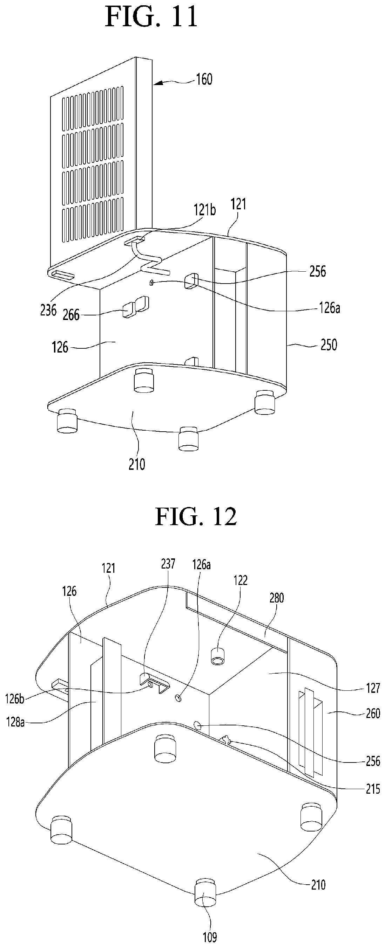

FIG. 8 is a perspective view illustrating the configuration of the second part of the dehumidifier according to an embodiment of the present disclosure, FIG. 9 is a plan view illustrating the configuration of the second part of the dehumidifier according to an embodiment of the present disclosure, FIG. 10 is a view illustrating the portion where the drain tank and the water supply tank are installed among the second part of the dehumidifier according to an embodiment of the present disclosure, FIG. 11 is a view illustrating a state where a condensate pipe extends from a heat exchanger according to an embodiment of the present disclosure, and FIG. 12 is a view illustrating the configuration of a first partition wall and a third partition wall according to an embodiment of the present disclosure.

Referring to FIGS. 8 to 12 together, the dehumidification module 300 according to an embodiment of the present disclosure may be detachably mounted on the dehumidifier 10.

The second part B may include tanks 250 and 260 in which water is stored and a vacuum pump 320 which is provided on one side of the tanks 250 and 260, is fluidly connected to the dehumidification module 300 and thus drives to create negative pressure in the internal space of the dehumidification member 320.

The second part B may further include a base 210 that forms a seating surface for the tanks 250 and 260 and the vacuum pump 320.

The second part B may further include a third partition wall 126 that divides the installation space of the tanks 250 and 260 and the installation space of the vacuum pump 320. The third partition wall 126 may protrude upward from the base 210.

The third partition wall 126 may include a first through-hole 126a through which the first connection pipe passes.

The third partition wall 126 may include a second through-hole 126b to which the condensate pipe 236 is connected. For example, the condensate pipe 236 may be inserted into the second through-hole 126b.

The third partition wall 126 may include a first condensate guide 237 that guides the water flowing through the condensate pipe 236 to flow into the drain tank 250. The first condensate guide 237 may protrude from the third partition wall 126 toward the space where the drain tank 250 is located.

The first condensate guide 237 may include a curved surface extending roundly downward so that water can naturally fall downward toward the drain tank 250.

The first condensate guide 237 may be disposed to cover the second through-hole 126b or to surround at least a portion of the perimeter of the second through-hole 126b.

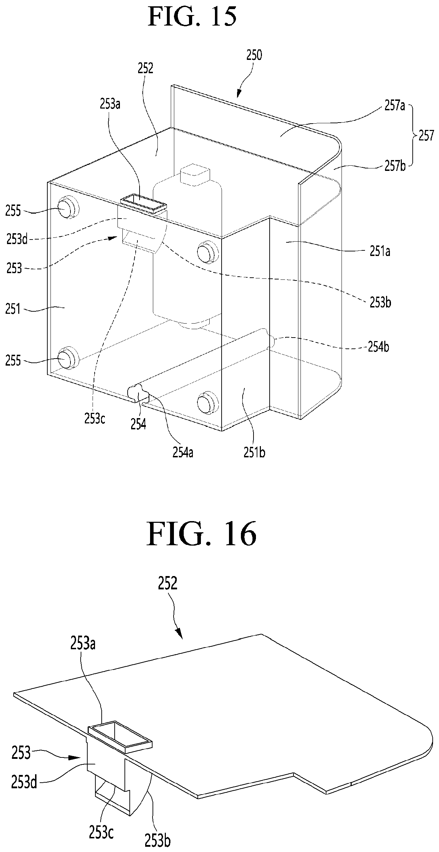

The first condensate guide 237 may be coupled to the upper surface of the drain tank 250, that is, the tank cover 252 (see FIG. 15).

The second part B may further include a fourth partition 127 that divides the installation space of the tanks 250 and 260 into the installation space of the drain tank 250 and the installation space of the water supply tank 260. The fourth partition wall 127 extends forward from the third partition wall 126 and may protrude upward from the base 210.

Sensors 256 and 266 that detect magnets 255 and 265 provided in the tanks 250 and 260 may be installed on the third partition wall 126. The sensors 256 and 266 may detect that the tanks 250 and 260 are mounted by detecting the magnets 255 and 265. If the sensors 256 and 266 do not detect the magnets 255 and 265, it can be recognized that the tanks 250 and 260 are not installed.

Based on whether the tanks 250 and 260 are mounted, information regarding whether the tanks 250 and 260 are mounted may be displayed on the display 108 or the auxiliary display 280.

The sensors 256 and 266 may include a first sensor 256 disposed on one side of the drain tank 250, that is, a portion facing the rear surface, with respect to the third partition 126. For example, a plurality of first sensors 256 are provided, and the plurality of first sensors 256 may be arranged in the left and right direction or in the vertical direction while facing one side of the drain tank 250.

The sensors 256 and 266 may include a second sensor 266 disposed on one side of the water supply tank 260, that is, a portion facing the rear surface, with respect to the third partition wall 126. For example, a plurality of second sensors 266 are provided, and the plurality of second sensors 266 may be arranged in the left and right direction or in the vertical direction while facing one side of the water supply tank 260.

The second part B may include a first installation guide 128a that guides the installation of the drain tank 250. The first mounting guide 128a protrudes upward from the base 210 and may be connected to the third partition wall 126.

The first mounting guide 128a may include a first part 128a1 supporting the first surface of the drain tank 250 and a second part 128a2 supporting the second surface of the drain tank 250. The first part 128a1 and the second part 128a2 may extend in different directions so that the first mounting guide 128a has a bent shape.

The third surface of the drain tank 250 may be supported by the fourth partition wall 127.

The second part B may include a second mounting guide 128b that guides the mounting of the water supply tank 260. The second mounting guide 128b protrudes upward from the base 210 and may be connected to the third partition wall 126.

The second mounting guide 128b may include a first part 128b1 supporting the first surface of the water supply tank 260 and a second part 128b2 supporting the second surface of the drain tank 250. The first part 128b1 and the second part 128b2 may be extended in different directions so that the second mounting guide 128b has a bent shape.

A first extension pipe 185a extending from the water supply tank 260 may be located on the upper side of the second mounting guide 128b. The first extension pipe 185a may be coupled to the discharge part 263c (see FIG. 18) of the tank duct 263 provided in the water supply tank 260.

The discharge part 263c is located adjacent to the upper end portion of the water supply tank 260, and accordingly, the discharge part 263c and the first extension pipe 185a may not interfere with the second mounting guide 128b.

The base 210 may include a rail 215 that guides the mounting of the tanks 250 and 260. The rail 215 protrudes from the base 210 and may be configured to extend in the direction in which the tanks 250 and 260 are mounted, that is, in the front and rear direction.

The rail 215 may include a first rail 215a provided on a portion of the base 210 in the area where the drain tank 250 is mounted. The first rail 215a may be inserted into the first rail groove 254 formed on the lower surface of the drain tank 250.

The first rail 215a may include a first part 215a1 extending upward from the base 210 and a second part 215a2 extending to both sides of the first part 215a1.

The rail 215 may include a second rail 215b provided on a portion of the base 210 in the area where the water supply tank 260 is mounted. The second rail 215b may be inserted into the second rail groove 264 formed on the lower surface of the water supply tank 260.

The description of the configuration of the second rail 215b refers to the description of the first rail 215a.

FIG. 13 is a view illustrating a state where the drain tank is separated from the second part of the dehumidifier according to an embodiment of the present disclosure, FIG. 14 is a front perspective view illustrating the configuration of a drain tank according to an embodiment of the present disclosure, FIG. 15 is a rear perspective view illustrating the configuration of a drain tank according to an embodiment of the present disclosure, and FIG. 16 is a view illustrating the cover of a drain tank according to an embodiment of the present disclosure.

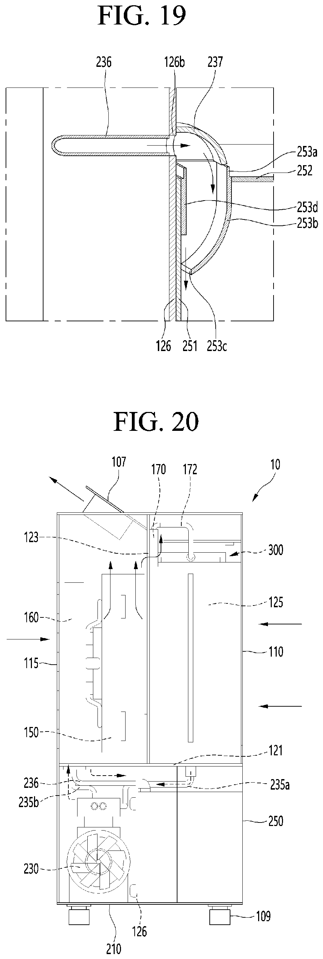

FIG. 17 is a view illustrating the configuration of a water supply tank according to an embodiment of the present disclosure, FIG. 18 is a view illustrating a tank duct of a water supply tank according to an embodiment of the present disclosure, and FIG. 19 is a cross-sectional view taken along line 19-19 of FIG. 8.

Referring to FIGS. 23 to 19, the drain tank 250 according to an embodiment of the present disclosure may have the shape of a closed housing capable of storing water. The drain tank 250 may include a tank main body 251 including the front, rear, side, and lower surfaces.

The tank main body 251 may include a first handle 258 that may be held by a user. The first handle 258 may be formed on the front surface of the tank main body 251. The user may hold the first handle 258 to pull in or out the tank main body 251 in the direction in which the drain tank 250 is mounted, that is, in the front and rear direction.

The first handle 258 may be formed by being recessed a portion of the front surface of the tank main body 251 toward the rear. Alternatively, the first handle 258 may be formed so that a portion of the front surface of the tank main body 251 protrudes forward.

The first handle 258 may be formed to be long in the vertical direction on the front surface of the tank main body 251. The first handle 258 may be placed on one front edge of the tank main body 251. For example, the first handle 258 may be placed on one side adjacent to the fourth partition wall 127 on the front surface of the tank main body 251.

The tank main body 251 may further include a first rail groove 254 to be coupled to the first rail 215a. The first rail groove 254 may be inserted into the first rail 215a to guide the drain tank 250 to move in the front and rear direction. The first rail groove 254 may be formed in a shape corresponding to the first rail 215a.

The first rail groove 254 may be formed on the lower surface of the tank main body 251. The first rail groove 254 may be formed by a portion of the lower surface of the tank main body 251 being recessed upward. The first rail groove 254 may be formed to be long in the direction in which the drain tank 250 is mounted, that is, in the front and rear direction. The first rail groove 254 may extend from the front surface to the rear surface of the tank main body 251.

The first rail groove 254 may include a first end portion 254a forming one end portion of the first rail groove 254 and a second end portion 254b forming the other end portion thereof. The first end portion 254a and the second end portion 254b may be disposed to face each other.

The first end portion 254a is a portion where the first rail 215a is initially inserted into the first rail groove 254 and may be formed on the lower side of the rear surface of the tank main body 251.

The second end portion 254b is a portion where the first rail 215a is completely inserted into the first rail groove 254 and may be formed on the lower side of the rear surface of the tank main body 251.

The first rail groove 254 may have a different cross-sectional area in the direction in which the drain tank 250 is mounted, that is, in the front and rear direction. Specifically, the first rail groove 254 may be formed so that the vertical cross-sectional area gradually narrows from the rear surface to the front surface of the tank main body 251.

In other words, the cross-sectional area of the second end portion 254b may be smaller than the cross-sectional area of the first end portion 254a. At this time, the cross-sectional area of the second end portion 254b may be formed to be the same as that of the first rail 215a, and the cross-sectional area of the first end portion 254a may be formed to be larger than the cross-sectional area of the first rail 215a.

This is because the space where the first rail 215a is initially inserted is widened and the space where insertion of the first rail 215a is completed is narrowed, thereby making it easier to install the drain tank 250 and at the same time tightly to fix it once the installation of the drain tank 250 is completed.

Additionally, the first rail groove 254 may be formed in the center of the lower surface of the tank main body 251. Accordingly, the drain tank 250 may be mounted or removed by sliding stably.

The tank main body 251 may further include a first magnet 255 detected by the first sensor 256. The first magnet 255 may be mounted on the rear surface of the tank main body 251. The first magnet 255 may be placed at a point facing the first sensor 256.

A plurality of the first magnets 255 may be provided. For example, the plurality of first magnets 255 may be disposed at the corners of the rear surface. Accordingly, when the installation of the drain tank 250 is completed, by the first sensor 256, the first magnet 255 is detected and the installation of the drain tank 250 may be detected.

The tank main body 251 may further include a first guide rib 257 extending upward along the edge of the upper surface of the tank main body 251. The first guide rib 257 may extend upward along the front end and side end of the tank main body 251.

The first guide rib 257 may be understood as a configuration for protecting the auxiliary display 280 and viewing information on the auxiliary display 280 at the same time. The first guide rib 257 is made of a transparent material, so even when the drain tank 250 is mounted, the information output from the auxiliary display 280 may be visible from the outside.

The auxiliary display 280 extends in both directions and may be provided on the lower surface of the first partition wall 121. The auxiliary display 280 may be disposed on the lower surface corresponding to the front edge of the first partition wall 121. The auxiliary display 280 may be spaced apart from the upper surface of the drain tank 250.

The first guide rib 257 may include a first rib 257a extending upward along the front edge of the tank main body 251, and a second rib 257b extending upward along the side edge of the tank main body 251.

The first rib 257a and the second rib 257b are connected to each other and may have the same height. For example, the first rib 257a may be formed in a straight shape, and the second rib 257b may be formed in a curved shape. In other words, the first guide rib 257 may include a curved surface extending roundly toward the rear.

The first rib 257a may be disposed to face the auxiliary display 280. When the drain tank 250 is mounted, the first rib 257a may be disposed in the front surface or in front of the auxiliary display 280 and cover the auxiliary display 280. Accordingly, the auxiliary display 280 may be protected by the first rib 257a.

The first rib 257a may be disposed adjacent to the lower side of the first partition wall 121. For example, the upper end portion of the first rib 257a may be disposed adjacent to the lower side of the front end portion of the first partition wall 121. Accordingly, the space between the first partition wall 121 and the front surface of the tank main body 251 may be shielded.

The second rib 257b may be disposed adjacent to the lower side of the first partition wall 121. For example, the upper end portion of the second rib 257b may be disposed adjacent to the lower side of the side end portion of the first partition wall 121. Accordingly, the space between the first partition wall 121 and the side of the tank main body 251 may be shielded.

The dehumidifier 10 may further include a water level sensor 259 for detecting the water level of the drain tank 250. The water level sensor 259 may include an electronic water level sensor or a capacitance level sensor.

According to this embodiment, the water level sensor 259 may be a contact-type water level sensor using an NPN transistor. The water level sensor 259 includes a battery, resistor, transistor, LED, and the like and may detect the water level of the drain tank 250. The water level sensor 259 uses a transistor that receives power from a battery to turn on the LED when electricity flows from water (condensate) stored in the drain tank 250. At this time, the number of LEDs turned on may be detected to calculate the remaining volume of the drain tank 250 and the remaining operation time of the dehumidifier may be calculated.

The water level sensor 259 may include a substrate 259a and a plurality of LEDs 259b provided on the substrate 259a. The substrate 259a extends vertically and may be mounted on the front surface of the drain tank 250. The substrate 259a may extend from the lower end of the front surface of the tank main body 251 to the upper end of the front surface of the tank main body 251.

The plurality of LEDs 259b may be disposed to be spaced apart in the vertical direction on the front surface of the substrate 259a. For example, the plurality of LEDs 259b are arranged side by side in a row on the front surface of the substrate 259a, and the corresponding LEDs may be turned on according to the detected water level in the drain tank 250.

Specifically, inside the drain tank 250, electric wires extending from transistors connected to each of the plurality of LEDs 259b may be disposed to be spaced apart in the vertical direction. In addition, water fills the drain tank 250, when the electric wire located at the water level conducts electricity from the water, the transistor receiving power from the battery may turn on the LED 259b. In other words, the water level of the drain tank 250 may be measured through the number of LEDs turned on among the plurality of LEDs 259b.

The plurality of LEDs 259b are spaced at equal intervals in the vertical direction of the substrate 259a, and the LEDs located at a height corresponding to the water level of the drain tank 250 may be turned on. For example, when the water level of the drain tank 250 is at the full water level, all of the plurality of LEDs 259b may be turned on. Conversely, when there is little water stored in the drain tank 250, all of the plurality of LEDs 259b may be turned off. In other words, the plurality of LEDs 259b may be turned on up to a height corresponding to the current water level of the drain tank 250.

According to this configuration of the water level sensor 259, the user has the advantage of being able to easily determine the water level of the drain tank 250. The water level of the drain tank 250 may be displayed on the display 108 or the auxiliary display 280. Additionally, the remaining operation time of the dehumidifier may be calculated based on the water level in the drain tank 250 or the number of LEDs turned on. The calculated remaining operation time of the dehumidifier may be displayed on the display 108 or the auxiliary display 280.

The side of the tank body 251 may include a first support surface 251a supported by the first part 128a1 of the first mounting guide 128a. The side of the tank main body 251 may include a second support surface 251b supported by the second part 128a2 of the first mounting guide 128a. The first support surface 251a and the second support surface 251b may form a bent surface. Accordingly, the installation of the drain tank 250 may be guided smoothly, and the drain tank 250 may be stably supported without shaking.

The drain tank 250 may further include a tank cover 252 forming an upper surface. The tank cover 252 may be detachably coupled to the upper portion of the tank main body 251. The user may remove the tank cover 252 and discard the water stored in the drain tank 250.

The drain tank 250 may further include a second condensate guide 253 that guides water flowing into the drain tank 250.

The second condensate guide 253 is provided at the upper end of the drain tank 250, and together with the first condensate guide 237, it can guide water to descend along the wall surface of the drain tank 250.

The second condensate guide 253 may be coupled to the tank cover 252. The second condensate guide 253 may be inserted to penetrate a portion of the tank cover 252. For example, the second condensate guide 253 may be formed to protrude to be long downward from the upper surface of the tank cover 252. At least a portion of the second condensate guide 253 may be disposed outside the drain tank 250 and another portion thereof be disposed inside the drain tank 250.

Specifically, a condensate flow path flowing from the upper portion to the lower portion may be formed inside the second condensate guide 253. An inlet through which condensate flows may be formed at the upper portion of the second condensate guide 253, and an outlet through which condensate may be discharged may be formed at the lower portion of the second condensate guide 253. The second condensate guide 253 may extend in the vertical direction.

The upper end of the second condensate guide 253 protrudes from the upper end of the drain tank 250, that is, the upper end of the tank cover 252, and when the drain tank 250 is mounted in front of the third partition wall 126, the upper end of the second condensate guide may be positioned in contact with or adjacent to the lower end of the first condensate guide 237.

The second condensate guide 253 may include an inlet part 253a forming an open upper surface, a guide surface 253b forming the front surface, a rear portion 254d forming the rear surface, and an open discharge part 253c at which a portion of the rear portion 254d is open.

The inlet part 253a may be connected to the first condensate guide 237 when the drain tank 250 is installed, and may be understood as a portion through which condensate flows in through the first condensate guide 237. For this purpose, the inlet part 253a may be disposed below the first condensate guide 237. The inlet part 253a may be located in contact with or adjacent to the lower end of the first condensate guide 237.

The guide surface 253b may extend downward from the inlet part 253a and extend into the interior of the drain tank 250. The guide surface 253b extends to be bent or rounded in a direction approaching the third partition wall 126, and while condensate flows along the guide surface 253b, the condensate may fall along the wall, that is, the rear surface, of the drain tank 250.

The guide surface 253b may be rounded in a downward direction closer to the third partition wall 126. In other words, the guide surface 253b may be formed so that the condensate flow path becomes increasingly narrow as it goes downward. Therefore, the second condensate guide 253 may be formed so that the cross-sectional flow area (horizontal cross-sectional area) corresponding to the lower portion is smaller than the cross-sectional flow area (horizontal cross-sectional area) corresponding to the upper portion.

The rear portion 253d may contact the rear of the tank main body 251 when the tank cover 252 is mounted on the tank cover 252. The rear portion 253d is in close contact with the inside of the rear surface of the tank main body 251, and may form the condensate flow path together with the guide surface 253b. The rear portion 253d may extend downward from the tank cover 252. The rear portion 253d may extend in a direction perpendicular to the ground.

The discharge part 253c is formed at the lower end of the second condensate guide 253 and functions to discharge condensate into the storage space of the drain tank 250. The discharge part 253c may be formed by cutting a portion of the rear portion 253d. The discharge part 253c may have a portion of the lower portion of the rear portion 253d cut out. Accordingly, the discharge part 253c and the rear surface of the drain tank 250 may form a discharge space for condensate.

According to this configuration, the first and second condensate guides 237 and 253 and the walls of the drain tank 250 may form a space for condensate to flow. Even if condensate having a high flow rate flows into the drain tank 250 through the condensate pipe 236, the condensate may easily fall along the wall of the drain tank 250 without being splashed into the drain tank 250.

The water supply tank 260 may have the shape of a closed housing capable of storing water. The water supply tank 260 may include a tank main body 261 including the front, rear, side, and lower surfaces.

The tank main body 261 may include a second handle 268 that may be held by the user. The second handle 268 may be formed on the front surface of the tank main body 261. The user may hold the second handle 268 to pull in or out the tank main body 261 in the direction in which the water supply tank 260 is mounted, that is, in the front and rear direction.

The second handle 268 may be formed by recessing a portion of the front surface of the tank main body 261 toward the rear. Alternatively, the second handle 268 may be formed so that a portion of the front surface of the tank main body 261 protrudes forward.

The second handle 268 may be formed to be long in the vertical direction on the front surface of the tank main body 261. The second handle 268 may be placed on one front edge of the tank main body 261. For example, the second handle 268 may be placed on one side adjacent to the fourth partition wall 127 on the front surface of the tank main body 261.

The tank main body 261 may further include a second rail groove 264 to be coupled to the second rail 215b. The second rail groove 264 may be inserted into the second rail 215b to guide the water supply tank 260 to move in the front and rear direction. The second rail groove 264 may be formed in a shape corresponding to the second rail 215b.

The second rail groove 264 may be formed on the lower surface of the tank main body 261. The second rail groove 264 may be formed by a portion of the lower surface of the tank main body 261 being recessed upward. The second rail groove 264 may be formed to be long in the direction in which the water supply tank 260 is mounted, that is, in the front and rear direction. The second rail groove 264 may extend from the front surface to the rear surface of the tank main body 261.

The second rail groove 264 may include a first end portion 264a forming one end portion of the second rail groove 264 and a second end portion 264b forming the other end portion. The first end portion 264a and the second end portion 264b may be disposed to face each other.

The first end portion 264a is a portion where the second rail 215b is initially inserted into the second rail groove 264 and may be formed on the rear side of the lower surface of the tank main body 261.

The second end portion 264b is a portion where the second rail 215b is completely inserted into the second rail groove 264 and may be formed on the rear side of the lower surface of the tank main body 261.

The second rail groove 264 may have a different cross-sectional area in the direction in which the water supply tank 260 is mounted, that is, in the front and rear direction. Specifically, the second rail groove 264 may be formed so that the vertical cross-sectional area gradually narrows from the rear surface to the front surface of the tank main body 261.

In other words, the cross-sectional area of the second end portion 264b may be smaller than the cross-sectional area of the first end portion 264a. At this time, the cross-sectional area of the second end portion 264b may be formed to be the same as the cross-sectional area of the second rail 215b, and the cross-sectional area of the first end portion 264a may be formed to be larger than the cross-sectional area of the second rail 215b.

For this reason, this is because the space where the second rail 215b is initially inserted is widened and the space where insertion of the second rail 215b is completed is narrowed, thereby making it easier to install the drain tank 260 and at the same time tightly to fix it once the installation of the drain tank 260 is completed.

Additionally, the second rail groove 264 may be formed in the center of the lower surface of the tank main body 261. Accordingly, the water supply tank 260 may be mounted or removed by sliding stably.

The tank main body 261 may further include a second magnet 265 detected by the second sensor 266. The second magnet 265 may be mounted on the rear surface of the tank main body 261. The second magnet 265 may be placed at a point facing the second sensor 266.

A plurality of second magnets 265 may be provided. For example, the plurality of second magnets 265 may be disposed at the corners of the rear surface. Therefore, when the installation of the water supply tank 260 is completed, the second magnet 265 is detected by the second sensor 266 and the installation of the water supply tank 260 may be detected.

The tank main body 261 may further include a second guide rib 267 extending upward along the upper edge of the tank main body 261. The second guide rib 267 may extend upward along the front end and side end of the tank main body 261.

The second guide rib 267 may include a first rib 267a extending upward along the front edge of the tank main body 261, and a second rib 267b extending upward along the side edge of the tank main body 261.

The first rib 267a and the second rib 267b are connected to each other and may have the same height. For example, the first rib 267a may be formed in a straight shape, and the second rib 267b may be formed in a curved shape. In other words, the second guide rib 267 may include a curved surface extending roundly toward the rear.

The first rib 267a may be disposed adjacent to the lower side of the first partition wall 121. For example, the upper end portion of the first rib 267a may be disposed adjacent to the lower side of the front end portion of the first partition wall 121. Accordingly, the space between the first partition wall 121 and the front surface of the tank main body 261 may be shielded.

The second rib 267b may be disposed adjacent to the lower side of the first partition wall 121. For example, the upper end portion of the second rib 257b may be disposed adjacent to the lower side of the side end portion of the first partition wall 121. Accordingly, the space between the first partition wall 121 and the side of the tank main body 261 may be shielded.

The side of the tank main body 261 may include a first support surface 261a supported by the first part 128b1 of the second mounting guide 128b. The side of the tank main body 261 may include a second support surface 261b supported by the second part 128b2 of the second mounting guide 128b. The first support surface 261a and the second support surface 261b may form a bent surface. Accordingly, the installation of the water supply tank 260 may be guided smoothly, and the water supply tank 260 may be stably supported without shaking.

The water supply tank 260 may further include a tank cover 262 forming an upper surface. The tank cover 262 may be detachably coupled to the upper portion of the tank main body 261. The user may remove the tank cover 262 and fill the water supply tank 260 with water.

The water supply tank 260 may further include a tank duct 263 that forms a water flow path to supply water stored in the water supply tank 260 to the outside. The tank duct 263 may be detachably mounted on the inner wall of the water supply tank 260.

The tank duct 263 may be fluidly connected to the water pump 180.

The tank duct 263 may include a duct main body 263a provided inside the water supply tank 260.

The duct main body 263a may extend downward from a position adjacent to the upper end of the water supply tank 260 to a position adjacent to the lower end thereof. A water flow path extending in the vertical direction may be formed inside the duct main body 263a. For example, the duct main body 263a may be formed in a stick or rod shape.

The tank duct 263 forms a lower end portion and may include an inlet part 263b through which water stored in the water supply tank 260 flows The inlet part 263b may be formed by opening the lower end portion of the duct main body 263a.

The tank duct 263 forms an upper end portion and may include a discharge part 263c that discharges water flowing through the tank duct 263 to the outside of the water supply tank 260.

The discharge part 263c protrudes from the duct main body 263a toward the wall of the water supply tank 260 and may extend to the outside of the water supply tank 260 through the wall of the water supply tank 260. A through-hole through which the discharge part 263c passes may be formed in the wall of the water supply tank 260.

The discharge part 263c is located above the second mounting guide 128b and may not interfere with the second mounting guide 128b.

The first connection pipe 185a may be coupled to the discharge part 263c. The first connection pipe 185a may be detachably coupled to the discharge part 263c. When separating the water supply tank 260, the user can separate the first connection pipe 185a from the discharge part 263c.

To facilitate the user's manipulation of the water supply tank 260, the first connection pipe 185a may be made of a flexible material.

When the water pump 180 is driven, the water stored in the water supply tank 260 flows into the inlet part 263b of the tank duct 263 and flows upward, and may be discharged through the discharge part 263c. Water discharged from the water supply tank 260 may be supplied to the dehumidification module 300 through the first connection pipe 185a, the water pump 180, and the second connection pipe 185b.

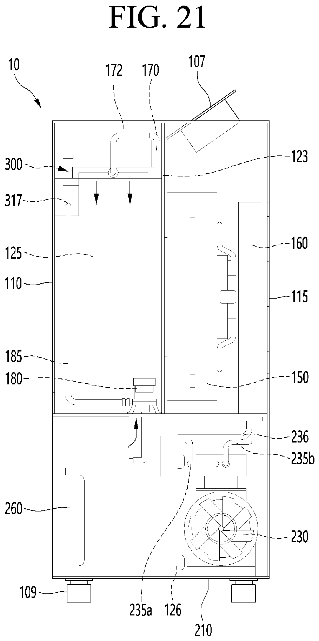

FIG. 20 is a view illustrating a state where the first suction flow and the second suction flow are suctioned and a discharge flow is generated in the dehumidifier according to an embodiment of the present disclosure, and FIG. 21 is a view illustrating a state where fluid is supplied from a water supply tank to a dehumidification module in a dehumidifier according to an embodiment of the present disclosure.

First, referring to FIG. 20, when the two-way suction fan 150 is driven, the first suction flow flowing into the inside of the dehumidifier 10 through the first suction part 110a and a second suction flow flowing into the interior of the dehumidifier 10 through the second suction part 115a may be generated.

The first suction flow may separate moisture (water vapor) from the air while passing through the dehumidification module 300. The air from which the moisture has been separated may be suctioned in in the axial direction through the first suction side of the fan 150, flow in the radial direction, and be discharged through the upper end of the fan 150.

The separated moisture may be discharged downward from the dehumidification module 300 and flow into the heat exchanger 160 through the connection pipe 235 and the vacuum pump 230.

The second suction flow passes through the heat exchanger 160, and in this process, moisture flowing into the heat exchanger 160 may be condensed. The air in which the moisture has been condensed is discharged from the heat exchanger 160 and may be suctioned in in the axial direction through the second suction side of the fan 150.

The second suction flow passing through the fan 150 may flow in a radial direction and be discharged through the upper end of the fan 150. The second suction flow may combine with the first suction flow, flow upward, and be discharged through the discharge part 106 of the dehumidifier 10. The discharge vane 107 may control the amount of air discharged from the discharge part 106.

At least some of the air discharged from the upper end of the fan 150 may flow into the valve device 170 through the guide hole formed in the second partition wall 123. At this time, the valve device 170 may be opened, and air may be supplied to the dehumidification module 300 through the valve device 170 and the supply pipe 172.

The air supplied to the dehumidification module 300 may remove water vapor accumulated inside the dehumidification member 320.

Next, referring to FIG. 21, when the water pump 180 is driven, the water stored in the water supply tank 260 may be supplied to the dehumidification module 300 through the water supply connection pipe 185 and the water supply pump 180.

The water supplied to the dehumidification module 300 flows into the water supply duct 315 of the dehumidification module 300 and may be supplied to the surroundings of the dehumidification member 320 through the water supply hole 315a. Because water may be in contact with the surface of the dehumidification member 320 due to the suction force of the fan 150, the dehumidification member 320 may become wet, and thus the moisture separation performance in the dehumidification member 320 may be improved.

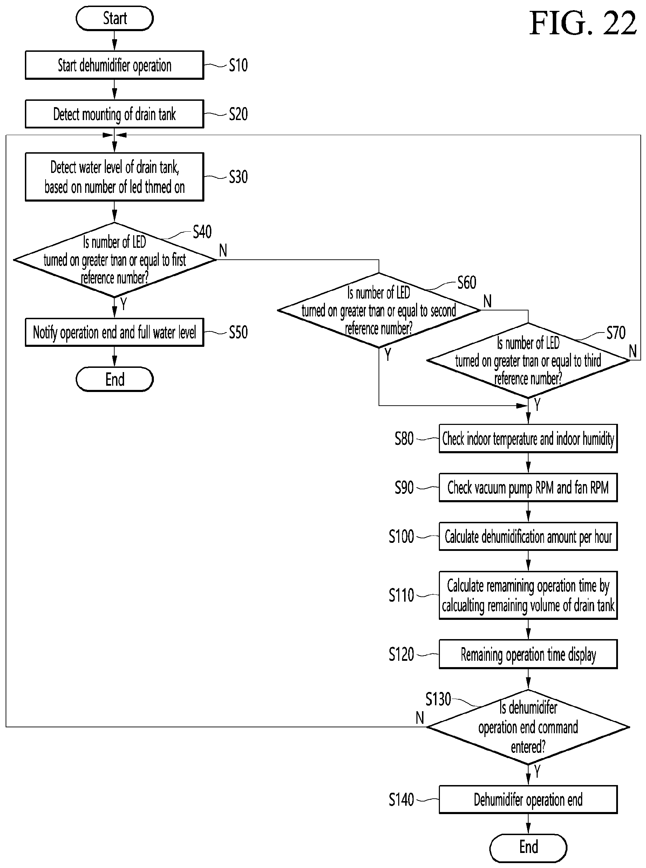

FIG. 22 is a flowchart illustrating a method for controlling a dehumidifier according to an embodiment of the present disclosure.

FIG. 22 presents an algorithm that detects the water level of the drain tank using a water level sensor, calculates the remaining volume of the drain tank based on the detected water level, and calculates the remaining operation time of the dehumidifier.

Referring to FIG. 22, the control part of the dehumidifier detects the installation of the drain tank when the dehumidifier starts operating.

For example, when a dehumidification operation command is input through the display 108, the first magnet 255 of the drain tank 250 is detected through the first sensor 256 and the installation of the drain tank 250 is detected (S10, S20).

When the drain tank 260 is installed, the dehumidifier 10 detects the water level of the drain tank based on the number of turned-on LEDs of the water level sensor 259.

Specifically, inside the drain tank 250, electric wires extending from transistors connected to each of the plurality of LEDs 259b may be disposed to be spaced apart in the vertical direction. In addition, as water fills the drain tank 250, when the electric wire located at the water level conducts electricity from the water, the transistor receiving power from the battery may turn on the LED 259b. In other words, the water level in the drain tank 250 may be measured through the number of LEDs turned on among the plurality of LEDs 259b (S30).

The dehumidifier 10 determines whether the number of LEDs turned on is greater than or equal to the first reference number (S40).

If the number of LEDs turned on is greater than or equal to the first reference number, the dehumidifier 10 may end the dehumidification operation and output a full water level notification.

Here, the first reference number is the number of LEDs corresponding to the full water level of the drain tank 250, and may be defined as the total of the plurality of LEDs. In other words, if the number of turned-on LEDs is greater than or equal to the first reference number, it may be understood that the water level of the drain tank 250 is at the full water level.

If the drain tank 250 is at the full water level, the operation of the dehumidifier 10 may be terminated and a full water level notification is output to guide emptying of the drain tank 250 (S50).

If the number of turned-on LEDs is less than the first reference number, the dehumidifier 10 determines whether the number of turned-on LEDs is greater than or equal to the second reference number (S60).

Here, the second reference number is the number of LEDs corresponding to the high water level of the drain tank 250, and may be smaller than the first reference number. In other words, if the number of turned-on LEDs is greater than or equal to the second reference number, it can be understood that the water level in the drain tank 250 is high.

If the number of LEDs turned on is less than the second reference number, the dehumidifier 10 determines whether the number of LEDs turned on is greater than or equal to the third reference number (S70).

Here, the third reference number is the number of LEDs corresponding to the low water level of the drain tank 250, and may be smaller than the second reference number. In other words, if the number of LEDs turned on is greater than or equal to the third reference number, it can be understood that the water level in the drain tank 250 is low.

If the number of LEDs turned on is less than the third reference number, it can be understood that there is almost no water stored in the drain tank 250. Therefore, in this case, since the remaining operation time of the dehumidifier 10 is sufficient, it is possible to return to step S30 without calculating and displaying the remaining operation time.

Meanwhile, when the number of LEDs turned on is greater than or equal to the second reference number or the third reference number, the dehumidifier 10 checks the indoor temperature and indoor humidity, and the motor rotation speed (RPM) of the vacuum pump 230 and checks the motor rotation speed (RPM) of the fan 150 to calculate the amount of dehumidification per hour.

The dehumidifier 10 may calculate the amount of dehumidification per hour by detecting and measuring the indoor temperature, indoor humidity, the motor rotation speed of the vacuum pump 230, and the motor rotation speed of the fan 150 (S 80, S90, S100).

Then, the dehumidifier 10 calculates the remaining volume of the drain tank 250, calculates the remaining operation time of the dehumidifier, and displays the remaining operation time.

The dehumidifier 10 may calculate the remaining volume of the drain tank 250 based on the water level detected through the water level sensor 259. In addition, the remaining operation time of the dehumidifier may be calculated by comparing the calculated remaining volume and the dehumidification amount per hour. The calculated remaining operation time of the dehumidifier may be displayed on the display 108 or the auxiliary display 280 (S110, S120).

The dehumidifier 10 determines whether a dehumidifier operation end command is input, and ends the dehumidifier operation when the operation termination command is input. If the operation end command is not input, the process returns to step S30 (S130, S140).

According to an embodiment of the present disclosure, constant temperature dehumidification may be easily implemented without increasing the temperature of the indoor space by selectively separating moisture in the air through a dehumidification module including a membrane without operating a refrigeration cycle.

According to an embodiment of the present disclosure, dehumidification may be accomplished by passing through a dehumidification module without requiring time for stabilization of the refrigeration cycle, so the dehumidification time may be shortened.

According to an embodiment of the present disclosure, separation and condensation of moisture may be easily performed by generating a first suction flow of air to remove moisture and a second suction flow of air to perform heat exchange.

According to an embodiment of the present disclosure, a two-way suction fan is provided so that the first suction flow and the second suction flow may be easily suctioned into the dehumidifier in directions facing each other.

According to an embodiment of the present disclosure, the first direction of the suction flow of air to remove moisture and the second direction of the flow of separated water vapor are configured to be perpendicular to each other, so that moisture separation performance may be improved.

According to an embodiment of the present disclosure, water vapor in the air passing through the dehumidification module may be moved into the inside of the membrane by generating a pressure difference between the inside and outside of the membrane using a vacuum pump.

According to an embodiment of the present disclosure, water vapor separated from the dehumidification module flows into a heat exchanger via a vacuum pump and exchanges heat with indoor air in the heat exchanger, making it easy to remove condensed moisture.

According to an embodiment of the present disclosure, the first part where the fan that generates air flow is disposed is disposed in the upper space of the dehumidifier, so that air suction from the indoor space may be easily achieved.

According to an embodiment of the present disclosure, a dehumidification module that separates moisture in the air is disposed in the first part, so that the separated water vapor falls in the direction of gravity, making it easy to collect water vapor and compactly constructing the piping connected to the vacuum pump.

According to an embodiment of the present disclosure, by placing the heat exchanger in the first part, the main flow of indoor air requiring dehumidification and the sub-flow for the heat exchanger may be easily generated in two directions using one fan.

According to an embodiment of the present disclosure, the first part is divided through a partition wall and a dehumidification module and a heat exchanger are disposed in the divided area, so that a main flow in which a relatively large amount of suction is performed and a sub flow in which a small amount of suction is performed may be easily generated and pressure loss may be prevented.

According to an embodiment of the present disclosure, a vacuum pump for suctioning water vapor separated from the dehumidification module is disposed in the second part, and the second part forms the lower space of the dehumidifier, so that the separated water vapor may be easily suctioned into the vacuum pump by the effect of gravity.

According to an embodiment of the present disclosure, the vacuum pump is disposed in the second part below the heat exchanger, so that high-temperature water vapor passing through the vacuum pump is quickly transferred to the heat exchanger, it is easy to block noise generated from the vacuum pump, and it may be effective in accessibility for maintenance.

According to an embodiment of the present disclosure, a drain tank storing water condensed in a heat exchanger is disposed in the second part, thereby facilitating the flow of condensed water in the direction of gravity.

According to an embodiment of the present disclosure, the water supply tank that supplies water to the dehumidification module is disposed in the second part, so that the upper space of the dehumidifier may be efficiently utilized and the user's accessibility to the water supply tank may be improved.

According to an embodiment of the present disclosure, the drain tank and the water supply tank are mounted to be pulled out from a space corresponding to the lower side of the dehumidification module, so that installation and separation of the drain tank and the water supply tank may be facilitated.

According to an embodiment of the present disclosure, the third partition is provided with a first condensate guide that guides water flowing through the condensate pipe to flow into the drain tank, and since the drain tank has a second condensate guide that guides water flowing into the drain tank. water splashing may be suppressed when condensate is collected in the drain tank.

According to an embodiment of the present disclosure, the drain tank is equipped with a water level sensor that detects the water level of condensate, and the control part may calculate and display the remaining operation time of the dehumidifier based on the detected water level.

## Claims

1. A dehumidifier comprising:
a main body including a suction part and a fan;
a dehumidification module including a dehumidification member which separates moisture from the air suctioned from the suction part by driving the fan;
a vacuum pump configured to provide driving force to discharge moisture separated from the dehumidification module to an outside of the dehumidification module;
a heat exchanger fluidly connected to the vacuum pump and configured to condense the separated moisture; and
a drain tank configured to store water condensed in the heat exchanger,
wherein the dehumidification module and the heat exchanger are disposed on an upper portion of the main body,
wherein the vacuum pump and the drain tank are disposed at a lower portion of the main body, and
wherein the drain tank is mounted to be withdrawable from a space corresponding to a lower side of the dehumidification module.

2. The dehumidifier of claim 1, further comprising:
a base forming a bottom surface of the main body; and
a first partition wall configured to divide the dehumidification module, the heat exchanger, the vacuum pump, and the drain tank in a vertical direction.

3. The dehumidifier of claim 2,
wherein a rail extending in the direction in which the drain tank is mounted is formed on an upper surface of the base, and
wherein a rail groove inserted into the rail is formed on a lower surface of the drain tank.

4. The dehumidifier of claim 3,
wherein the cross-sectional area of the rail groove gradually decreases from the inlet side where the rail is inserted to the opposite side thereof.

5. The dehumidifier of claim 2,
wherein, on a lower side of the first partition wall, a display is provided to provide information about the drain tank, and
wherein a guide rib is formed in the drain tank, extending upward along an edge of the upper surface to shield the display.

6. The dehumidifier of claim 2, further comprising:
a space provided on an upper surface of the first partition wall and in which the dehumidification module is installed, and
a second partition wall configured to separate the space where the fan and the heat exchanger are installed.

7. The dehumidifier of claim 2, further comprising:
a third partition wall provided on a lower surface of the first partition wall and configured to separate the installation space of the drain tank and the installation space of the vacuum pump.

8. The dehumidifier of claim 7,
wherein a sensor that detects a magnet provided in the drain tank is installed on the third partition wall.

9. The dehumidifier of claim 2, further comprising:
a water supply tank configured to supply water to the dehumidification module,
wherein the water supply tank is mounted to be withdrawable from a space corresponding to the lower side of the dehumidification module.

10. The dehumidifier of claim 9, further comprising:
a fourth partition wall provided on a lower surface of the first partition wall and configured to divide the drain tank and the water supply tank.

11. The dehumidifier of claim 10, further comprising:
a mounting guide provided on an upper surface of the base and configured to guide the mounting of the drain tank and the water supply tank,
wherein the mounting guide includes:
a first mounting guide extending upward from one edge of the base and configured to be in contact with one side of the drain tank; and
a second mounting guide extending upward from the other edge of the base and configured to be in contact with one side of the water supply tank.

12. The dehumidifier of claim 9, further comprising:
a water supply connection pipe connected to the water supply tank and extending through the first partition wall to supply water from the water supply tank to the dehumidification module; and
a water pump installed in the water supply connection pipe.

13. The dehumidifier of claim 12,
wherein a tank duct forming a water flow path that supplies water to the water pump is provided inside the water supply tank.

14. The dehumidifier of claim 7, further comprising:
a condensate pipe extending to guide water condensed in the heat exchanger to the drain tank,
wherein the third partition wall includes a second through-hole through which the condensate pipe passes.

15. The dehumidifier of claim 14,
wherein a first guide is formed on the third partition wall to guide the water flowing through the condensate pipe to flow into the drain tank, and
wherein the first guide protrudes from the third partition wall toward the space where the drain tank is located.

## Amended claims

### Amended claims in accordance with Rule 137(2) EPC.

1. A dehumidifier comprising:
a main body (100) including a suction part (110) and a fan (150);
a dehumidification module (300) including a dehumidification member (320) which separates moisture from the air suctioned from the suction part (110) by driving the fan (150);
a vacuum pump (230) configured to provide driving force to discharge moisture separated from the dehumidification module (300) to an outside of the dehumidification module (300);
a heat exchanger (160) fluidly connected to the vacuum pump (230) and configured to condense the separated moisture; and
a drain tank (250) configured to store water condensed in the heat exchanger (160),
**characterized in that**:
the dehumidification module (300) and the heat exchanger (160) are disposed on an upper portion of the main body (100),
the vacuum pump (230) and the drain tank (250) are disposed at a lower portion of the main body (100), and
the drain tank (250) is mounted to be withdrawable from a space corresponding to a lower side of the dehumidification module (300).

2. The dehumidifier of claim 1, further comprising:
a base (210) forming a bottom surface of the main body (100); and
a first partition wall (121) configured to divide the dehumidification module (300), the heat exchanger (160), the vacuum pump (230), and the drain tank (250) in a vertical direction.

3. The dehumidifier of claim 2,
wherein a rail (215) extending in the direction in which the drain tank (250) is mounted is formed on an upper surface of the base (210), and
wherein a rail groove (254) inserted into the rail (215) is formed on a lower surface of the drain tank (250).

4. The dehumidifier of claim 3,
wherein the cross-sectional area of the rail groove (254) gradually decreases from the inlet side where the rail (215) is inserted to the opposite side thereof.

5. The dehumidifier of claim 2,
wherein, on a lower side of the first partition wall (121), a display is provided to provide information about the drain tank (250), and
wherein a guide rib (257, 267) is formed in the drain tank (250), extending upward along an edge of the upper surface to shield the display.

6. The dehumidifier of claim 2, further comprising:
a space provided on an upper surface of the first partition wall (121) and in which the dehumidification module (300) is installed, and
a second partition wall (123) configured to separate the space where the fan (150) and the heat exchanger (160) are installed.

7. The dehumidifier of claim 2, further comprising:
a third partition wall (126) provided on a lower surface of the first partition wall (121) and configured to separate the installation space of the drain tank (250) and the installation space of the vacuum pump (230).

8. The dehumidifier of claim 7,
wherein a sensor (256, 266) that detects a magnet provided in the drain tank (250) is installed on the third partition wall (126).

9. The dehumidifier of claim 2, further comprising:
a water supply tank (260) configured to supply water to the dehumidification module (300),
wherein the water supply tank (260) is mounted to be withdrawable from a space corresponding to the lower side of the dehumidification module (300).

10. The dehumidifier of claim 9, further comprising:
a fourth partition wall (127) provided on a lower surface of the first partition wall (121) and configured to divide the drain tank (250) and the water supply tank (260).

11. The dehumidifier of claim 10, further comprising:
a mounting guide (128a, 128b) provided on an upper surface of the base (210) and configured to guide the mounting of the drain tank (250) and the water supply tank (260),
wherein the mounting guide includes:
a first mounting guide (128a) extending upward from one edge of the base (210) and configured to be in contact with one side of the drain tank (250); and
a second mounting guide (128b) extending upward from the other edge of the base (210) and configured to be in contact with one side of the water supply tank (260).

12. The dehumidifier of claim 9, further comprising:
a water supply connection pipe (185) connected to the water supply tank (260) and extending through the first partition wall (121) to supply water from the water supply tank (260) to the dehumidification module (300); and
a water pump (180) installed in the water supply connection pipe (185).

13. The dehumidifier of claim 12,
wherein a tank duct (263) forming a water flow path that supplies water to the water pump (180) is provided inside the water supply tank (260).

14. The dehumidifier of claim 7, further comprising:
a condensate pipe (236) extending to guide water condensed in the heat exchanger (160) to the drain tank (250),
wherein the third partition wall (126) includes a second through-hole (126b) through which the condensate pipe (236) passes

15. The dehumidifier of claim 14,
wherein a first condensate guide (237) is formed on the third partition wall (126) to guide the water flowing through the condensate pipe (236) to flow into the drain tank (250), and
wherein the first condensate guide (237) protrudes from the third partition wall (126) toward the space where the drain tank (250) is located.
